(19) Europäisches Patentamt
European Patent Office
Office européen des brevets

(11) **EP 4 306 317 A1**

(12) **EUROPEAN PATENT APPLICATION**
published in accordance with Art. 153(4) EPC

(43) Date of publication:
**17.01.2024 Bulletin 2024/03**

(21) Application number: **22766886.0**

(22) Date of filing: **28.02.2022**

(51) International Patent Classification (IPC):
**B32B 27/32** (2006.01)    **C09J 7/38** (2018.01)
**C09J 11/08** (2006.01)    **C09J 109/06** (2006.01)

(52) Cooperative Patent Classification (CPC):
**B32B 27/32; C09J 7/38; C09J 11/08; C09J 109/06**

(86) International application number:
**PCT/JP2022/008218**

(87) International publication number:
**WO 2022/190927 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.03.2021 JP 2021039863**

(71) Applicant: **Toray Advanced Film Co., Ltd.**
**Chuo-ku**
**Tokyo 103-0021 (JP)**

(72) Inventors:
• **YAMANAKA, Kohei**
**Otsu-shi, Shiga 520-8558 (JP)**

• **TAMURA, Naoko**
**Otsu-shi, Shiga 520-8558 (JP)**
• **OHKURA, Masatoshi**
**Otsu-shi, Shiga 520-8558 (JP)**
• **YASUOKA, Satoshi**
**Takatsuki-shi, Osaka 569-0807 (JP)**
• **NAGAE, Yoshikazu**
**Takatsuki-shi, Osaka 569-0807 (JP)**
• **INOUE, Norihide**
**Takatsuki-shi, Osaka 569-0807 (JP)**

(74) Representative: **Kador & Partner Part mbB**
**Corneliusstraße 15**
**80469 München (DE)**

(54) **LAMINATED FILM AND FILM ROLL**

(57)      Provided are a laminated film with excellent adhesion to metal, low environmental burden, and excellent adhesiveness and ease of rolling out, and a film roll. The laminated film includes a resin layer A and a substrate, and the laminated film satisfies the following (a), (b), and (c): (a) a polycarbonate probe tack maximum value F at 23°C on a surface on a resin layer A side is 0.098 N/mm$^2$ to 0.294 N/mm$^2$; (b) a ten-point average roughness Rz of a surface which is opposite to the surface on the resin layer A side is 5 um or more; and (c) a layer including the surface which is opposite to the surface on the resin layer A side contains a polyolefin-based resin containing a carboxylic acid group and/or a polyolefin-based resin containing a metal carboxylate group.

**EP 4 306 317 A1**

**Description**

TECHNICAL FIELD

The present invention relates to a laminated film and a film roll.

BACKGROUND ART

Since optical products made of various materials such as synthetic resins, metals, and glass are greatly affected by scratches and stains generated during processing, transportation processes, and storage, they are generally handled with a surface protective sheet or film attached thereto. In general, a surface protective film or the like on which an adhesive layer is formed on a supporting substrate made of a thermoplastic resin or paper is used, and the surface of the adhesive layer is used to be bonded to an adherend.

As such a surface protective film, films described in Patent Documents 1 to 4 have been proposed.

PRIOR ART DOCUMENT

PATENT DOCUMENTS

Patent Document 1: Japanese Patent Laid-open Publication No. 04-146983
Patent Document 2: Japanese Patent Laid-open Publication (Translation of PCT Application) No. 11-512478
Patent Document 3: Japanese Patent Laid-open Publication No. 2011-037243
Patent Document 4: Japanese Patent Laid-open Publication No. 06-270358

SUMMARY OF THE INVENTION

PROBLEMS TO BE SOLVED BY THE INVENTION

Properties required for such a surface protective film include adhesion to adherends having not only smooth surfaces but also various surface shapes, non-peeling off from the adherends under environmental changes such as temperature and humidity or small stress, easy peeling off from the adherends after processing or after use, and no adhesive component remaining on the adherends when peeled off from the adherends, and the like.

Examples of products requiring a surface protective film include members for displays, members for automobiles, members for building materials, and lenses for optical devices and glasses. Among them, lenses for optical devices and glasses have a curved surface shape, and therefore, a strong adhesive force is required to protect the surface along the shape, but it is greatly difficult to achieve both a strong adhesive force and peelability or non-contamination to the adherend after use.

In addition, in the case of a surface protective film having a relatively high adhesive force, when a single surface protective film is wound into a roll shape, the adhesive surface and the opposite surface firmly adhere to each other, making it difficult to roll out the rolled surface protective film at the time of use. Therefore, there is a case where a release liner such as a release paper or a release film is separately attached to the adhesive surface side and then the surface protective film is wound at the time of surface protective film production. However, in such a case, the release liner becomes waste, which is not preferable from the viewpoint of environmental burden. In addition, the use of release liner reduces the length of surface protective film that can be wound per product roll, which causes production problems such as an increase in the number of times rolled products need to be replaced. Therefore, there is a growing need for a surface protective film that can be easily rolled out without a release liner.

In addition, a lens for glasses is polished at the time of surface finishing, and at the time of this polishing processing, a method is used in which a molten low-melting-point alloy is cast in block form on the back side of the lens surface to be polished and integrated with the lens, and then the low-melting-point alloy is attached to a fixed shaft and rotated for polishing. In this case, a surface protective film is used on the back side surface to protect the lens surface and ensure adhesion to the low-melting-point alloy. In order to improve the adhesion of this surface protective film to the low-melting-point alloy, means for improving the polarity of the low-melting-point alloy contact surface is generally used, but problems have been found such that when a conventional surface protective film is wound into a roll shape without a release liner, the adhesive surface and the low-melting-point alloy contact surface stick strongly to each other, making it difficult to roll out the surface protective film.

The film described in Patent Document 1 has sufficient adhesion to the low-melting-point alloy, but has problems such that, for example, a release liner is required for winding the film in a rolled state, causing a high environmental burden, and adhesive residues occur when the film is used for a lens for glasses. The film described in Patent Document 2 has sufficient adhesion to the low-melting-point alloy, but has problems such that, for example, the adhesive force is insufficient, and when used for a lens for glasses, the film cannot follow the curved surface of the lens and floats on the edge surface, causing the surface protective film to peel off during lens polishing. The film described in Patent Document 3 has an excellent rolling out property, but there may be a case where the adhesive force is low, and when used for a lens for glasses, the film cannot follow the curved surface of the lens and floats on the edge surface, causing the surface protective film to peel off during lens polishing, and the adhesion to the low-melting-point alloy is also insufficient. The film described in Patent Document 4 improves the coefficient of static friction with the low-melting-point alloy block by roughening the back layer, but there are problems such that, for example, the adhesion to the low-melting-point alloy is still insufficient, and the low-melting-point alloy block is peeled off during lens polishing.

As described above, the film described in Patent Documents 1 to 4 have not been able to provide a film that achieves both sufficient adhesiveness and sufficient adhesion to the cast low-melting-point alloy.

Therefore, an object of the present invention is to provide a laminated film with excellent adhesion to metal, low environmental burden, and excellent adhesiveness and ease of rolling out, and a film roll.

SOLUTIONS TO THE PROBLEMS

One preferred aspect of the laminated film and the film roll of the present invention is as follows.

(1) A laminated film includes a resin layer A and a substrate, and satisfies the following (a), (b), and (c):

(a) a polycarbonate probe tack maximum value F at 23°C on a surface on a resin layer A side is 0.098 N/mm$^2$ to 0.294 N/mm$^2$ ;
(b) a ten-point average roughness Rz of a surface which is opposite to the surface on the resin layer A side is 5 um or more; and
(c) a layer including the surface which is opposite to the surface on the resin layer A side contains a polyolefin-based resin containing a carboxylic acid group and/or a polyolefin-based resin containing a metal carboxylate group.

(2) The laminated film according to (1), wherein a tear strength at 23°C is 0.490 N/mm to 9.80 N/mm.
(3) The laminated film according to (1) or (2), wherein a tensile elastic modulus at an atmospheric temperature of 23°C and a tensile speed of 300 mm/min is 80 MPa to 300 MPa.
(4) The laminated film according to any one of (1) to (3), wherein an arithmetic average waviness Wa of the surface on the resin layer A side is less than 0.20 um.
(5) The laminated film according to any one of (1) to (4), wherein the laminated film is for surface protection of glasses lenses.
(6) The laminated film according to any one of (1) to (5), wherein the resin layer A contains a styrene-based elastomer as a main component.
(7) The laminated film according to (6), wherein 100 mass% of the resin layer A contains 50 mass% to 90 mass% of the styrene-based elastomer and 10 mass% to 50 mass% of a terpene-based resin.
(8) The laminated film according to (6) or (7), wherein the resin layer A contains the styrene-based elastomer as the main component, and a storage elastic modulus of the styrene-based elastomer at 25°C and 1 Hz is 0.05 MPa to 0.9 MPa.
(9) The laminated film according to any one of (1) to (8), wherein the layer including the surface which is opposite to the surface on the resin layer A side contains an olefin-based resin containing a 4-methyl-1-pentene unit.
(10) The laminated film according to any one of (1) to (9), wherein an adhesion force between the layer including the surface which is opposite to the surface on the resin layer A side and a low-melting-point alloy having a melting point of 47°C is 30 N/78.5 mm$^2$ to 90 N/78.5 mm$^2$.
(11) The laminated film according to any one of (1) to (10), wherein the laminated film has a 180° peeling force of 5.0 N/25 mm or less after the surface on the resin layer A side and the surface which is opposite to the surface on the resin layer A side of the laminated film are bonded at 23°C and 0.1 MPa and then stored at 23°C for 24 hours.
(12) A film roll obtained by winding the laminated film according to any one of (1) to (11) into a roll shape in a state where the surface on the resin layer A side and the surface opposite thereto are in contact with each other.

EFFECTS OF THE INVENTION

According to the present invention, it is possible to provide a laminated film with excellent adhesion to metal, low environmental burden, and excellent adhesiveness and ease of rolling out, and a film roll.

BRIEF DESCRIPTION OF THE DRAWINGS

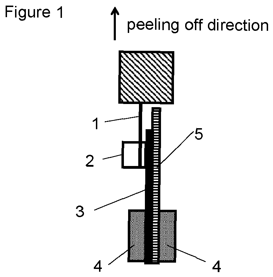

Fig. 1 is a schematic view showing a measurement method in evaluation of adhesion to a low-melting-point alloy.

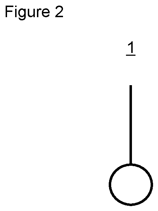

Fig. 2 is a schematic view of a metal wire having a loop portion used for evaluating adhesion to a low-melting-point alloy.

EMBODIMENTS OF THE INVENTION

Hereinafter, embodiments of the present invention will be described.

One preferred aspect of the present invention is a laminated film including a resin layer A and a substrate, the laminated film satisfying the following (a), (b), and (c) :

(a) a polycarbonate probe tack maximum value F at 23°C on a surface on a resin layer A side is 0.098 N/mm$^2$ to 0.294 N/mm$^2$ ;
(b) a ten-point average roughness Rz of a surface which is opposite to the surface on the resin layer A side is 5 um or more; and
(c) a layer including the surface which is opposite to the surface on the resin layer A side contains a polyolefin-based resin containing a carboxylic acid group and/or a polyolefin-based resin containing a metal carboxylate group.

According to the above aspect, it is possible to provide a laminated film with excellent adhesion to metal, low environmental burden, and excellent adhesiveness and ease of rolling out, and a film roll.

Here, it is preferable that the resin layer A is a layer containing at least a resin and has adhesiveness at 23°C. A preferred aspect of the resin layer A will be described later. In the present invention, the surface of the laminated film on the resin layer A side refers to a surface on the air side when the laminated film is disposed in air and viewed in the order of air, the resin layer A, and the substrate.

The laminated film of the present invention preferably contains a polyolefin-based resin containing a carboxylic acid group and/or a polyolefin-based resin containing a metal carboxylate group in the layer including the surface on the side opposite to the surface on the resin layer A side. Specifically, for example, when the laminated film of the present invention has a two-layer structure of the substrate and the resin layer A, the substrate preferably contains a polyolefin-based resin containing a carboxylic acid group and/or a polyolefin-based resin containing a metal carboxylate group. As another example, when the laminated film of the present invention has the resin layer A, the substrate, and the layer including the surface opposite to the surface on the resin layer A side in this order, it is preferable that at least the layer including the surface opposite to the surface on the resin layer A side contains a polyolefin-based resin containing a carboxylic acid group and/or a polyolefin-based resin containing a metal carboxylate group.

Preferable examples of the polyolefin-based resin containing a carboxylic acid group and/or the polyolefin-based resin containing a metal carboxylate group include an ionomer resin obtained by crosslinking ethylene-acrylic acid copolymers, ethylene-methacrylic acid copolymers, or ethylene-methacrylic acid copolymers with a metal ion, and a maleic anhydride-modified polyethylene resin. These may be used alone or in combination.

Among the above, from the viewpoint of adhesion to metal on the surface on the side opposite to the surface on the resin layer A side, the layer including the surface opposite to the surface on the resin layer A side of the laminated film of the present invention preferably contains an ethylene-acrylic acid copolymer and/or an ethylene-methacrylic acid copolymer.

The content of the polyolefin-based resin containing a carboxylic acid group and/or the polyolefin-based resin containing a metal carboxylate group is, from the viewpoint of adhesion to metal, preferably 40 mass% or more, more preferably 60 mass% or more, and still more preferably 80 mass% or more in total when the entire layer including the surface opposite to the surface on the resin layer A side is taken as 100 mass%. The higher the content, the more preferable, but too high a content causes problems such as blocking with the surface on the side having the resin layer A when wound into a roll shape, and therefore the content is substantially limited to about 90 mass%.

From the viewpoint of adhesion to metal on the surface opposite to the surface on the resin layer A side, it is preferable that the layer including the surface opposite to the surface on the resin layer A side contains a polyolefin-based resin containing a carboxylic acid group and/or a polyolefin-based resin containing a metal carboxylate group, but on the other hand, there is a problem such that blocking is likely to occur when the resin layer A has adhesiveness. Although blocking can be eliminated by sandwiching the release liner, it is preferable not to use the release liner from the viewpoint of reducing environmental burden. The present inventors have extensively conducted studies, and resultantly found that by setting the adhesiveness of the surface on the resin layer A side and the ten-point average roughness Rz of the surface opposite to the surface on the resin layer A side within preferable ranges, it is possible to obtain a laminated film with excellent adhesion to metal, low environmental burden, and excellent adhesion and ease of rolling out, and a film roll, and arrived at the present invention. Hereinbelow, the details will be described.

In the laminated film of the present invention, the polycarbonate probe tack maximum value F at 23°C on the surface on the resin layer A side is preferably 0.098 $N/mm^2$ to 0.294 $N/mm^2$. Note that "to" in a range such as 0.098 $N/mm^2$ to 0.294 $N/mm^2$ indicates more than or equal to and less than or equal to, and the same applies hereinafter. The polycarbonate probe tack maximum value F at 23°C is measured using the method described in examples. The polycarbonate probe tack maximum value F is an index of tackiness of the surface on the resin layer A side evaluated with a polycarbonate probe. When the surface on the resin layer A side and the surface opposite to the surface on the resin layer A side of the laminated film are unknown, the surfaces can be specified using the following method. First, the polycarbonate probe tack maximum value F of both surfaces of the laminated film is measured according to the method described in examples. Thereafter, a surface having a larger arithmetic average value of the polycarbonate probe tack maximum value F on the laminated film is defined as the surface on the resin layer A side, and a surface having a smaller arithmetic average value is defined as the surface opposite to the surface on the resin layer A side.

When the polycarbonate probe tack maximum value F at 23°C on the surface on the resin layer A side is 0.098 $N/mm^2$ or more, sufficient adhesiveness can be exerted, and it is possible to suppress the floating of the laminated film from an adherend due to the failure to follow a curved surface when the laminated film of the present invention is bonded to the adherend having the curved surface shape. In addition, since the laminated film has sufficient adhesive force, for example, when the film is used as a protective film for a lens for glasses, film peeling off from the lens can be suppressed at the time of polishing the lens for glasses. In addition, adhesive components are unlikely to remain on the adherend at the time of peeling off from the adherend. From the same point of view, the polycarbonate probe tack maximum value F at 23°C is more preferably 0.148 $N/mm^2$ or more, still more preferably 0.196 $N/mm^2$ or more.

In addition, as described later, when the ten-point average roughness Rz of the surface opposite to the surface on the resin layer A side is 5 um or more and the polycarbonate probe tack maximum value F at 23°C is 0.294 $N/mm^2$ or less, in a case where the layer including the surface opposite to the surface on the resin layer A side contains the polyolefin-based resin containing a carboxylic acid group and/or the polyolefin-based resin containing a metal carboxylate group and the laminated film is wound into a roll shape without the release liner, the laminated film can also be easily rolled out without blocking, and workability can be prevented from being impaired.

The polycarbonate probe tack maximum value F can be achieved by controlling the state of the surface based on the raw material composition and film formation conditions described later. Specifically, as a method for setting the polycarbonate probe tack maximum value F at 23°C of the surface on the resin layer A side within a range from 0.098 $N/mm^2$ to 0.294 $N/mm^2$, for example, a method can be preferably mentioned in which in 100 mass% of the resin layer A, a total of 50 mass% to 90 mass% of the styrene-based elastomer with a storage elastic modulus of 0.1 MPa to 0.9 MPa at 25°C, 1 Hz is contained and a total of 10 mass% to 50 mass% of the terpene-based resin is contained in the resin layer A as a tackifier.

By setting the viscoelasticity and the content of the styrene-based elastomer contained in the resin layer A within the above ranges, the laminated film of the present invention can exert excellent adhesive properties, such as an excellent bondability and suppression of adhesive residues, when laminated to the adherend. In addition, when the resin layer A contains a terpene-based resin and the content is within the above ranges, it is possible to obtain excellent bondability to the adherend having the curved surface shape. In addition, adhesive residues are less likely to occur at the time of peeling off after bonded to the adherend.

In the laminated film of the present invention, the ten-point average roughness Rz of the surface opposite to the surface on the resin layer A side is preferably 5 um or more. When the ten-point average roughness Rz is 5 um or more, the conveyability during film formation can be improved, and the laminated film can also be easily unwound, without impairing workability, when the laminated film is wound into a roll shape without the release liner. From the same viewpoint, the ten-point average roughness Rz is more preferably 6 um or more, still more preferably 7 um or more. The ten-point average roughness Rz is preferably 15 um or less from the viewpoint of preventing blocking from worsening due to protrusions of the layer including the surface opposite to the surface on the resin layer A side penetrating into the resin layer A when rolling out from a rolled state, and the viewpoint of reducing the decrease in adhesive force due to the protrusions being transferred to the resin layer A when wound into a roll shape. The ten-point average roughness Rz can be appropriately achieved by controlling the state of the surface based on materials and thicknesses of the layer including the surface opposite to the surface on the resin layer A side and the substrate, and film formation conditions, which will be described later. The ten-point average roughness Rz can be measured using the method described in examples, but when an MD direction and a TD direction of the laminated film are unknown, the ten-point average roughness Rz can be calculated using the following method. First, a test is performed 3 times for each of 4 directions at 45° intervals starting from an arbitrary direction in the film plane. Thereafter, the arithmetic average value measured 12 times in total is taken as the ten-point average roughness Rz of the laminated film of the present invention. Test conditions in one direction in this case are as follows. The measurement range is 0.2 mm in the main orientation direction and 2 mm in the direction of 90° to the main orientation direction. The measurement pitch is 10 um in the main orientation direction and 0.2 um in the direction of 90° to the main orientation direction. A diamond needle having a tip radius of 2.0 um is used as a stylus, and measurement is performed under a load of 100 $\mu$N and a cutoff of 0.8 mm. Here, the main orientation direction refers to a direction showing the highest value when the tensile elastic modulus is measured in each direction forming an angle of 0° to 175° at intervals of 5° with respect to an arbitrary direction defined as 0° in the film plane. The tensile elastic modulus can be measured by the method described in examples.

The laminated film of the present invention preferably has a tear strength of 0.490 N/mm to 9.80 N/mm at 23°C. The tear strength can be calculated by measuring the laminated film in a longitudinal direction (MD direction) and a width direction (TD direction) using the method described in examples. When the MD direction and the TD direction of the laminated film are unknown, the tear strength at 23°C can be calculated using the following method. First, the tear strength at 23°C is evaluated 5 times for each of 4 directions at 45° intervals starting from an arbitrary direction in the film plane. Thereafter, the arithmetic average value in each direction is determined, and the arithmetic average value in the direction in which the tear strength at 23°C is the highest and in the direction of 90° to this direction (average of 10 times in total) is taken as the tear strength of the laminated film of the present invention at 23°C. The tear strength of 0.490 N/mm or more at 23°C can suppress film breakage during peeling of the film from the adherend. From the same viewpoint, the tear strength at 23°C is more preferably 0.980 N/mm or more, still more preferably 1.96 N/mm or more. By setting the tear strength at 23°C to 9.80 N/mm or less, it is possible to improve the cutting property of the laminated film in a state where the laminated film is bonded to the adherend having the curved surface shape, when the laminated film is bonded to the adherend. From the same viewpoint, the tear strength at 23°C is more preferably 4.90 N/mm or less.

The tear strength at 23°C can be controlled by adjusting materials and thicknesses of the resin layer A, the substrate, or the layer including the surface opposite to the surface on the resin layer A side, and film formation conditions, and can be achieved particularly by controlling the rigidity of the substrate based on the raw material composition of the substrate described later. As a specific method of setting the tear strength at 23°C within a range from 0.490 N/mm to 9.80 N/mm, for example, a method of containing a polyethylene resin such as low density polyethylene having a density of 910 kg/m$^3$ to 940 kg/m$^3$, medium density polyethylene, or linear low density polyethylene as a main component in the substrate can be preferably mentioned.

The laminated film of the present invention preferably has a tensile elastic modulus of 80 MPa to 300 MPa at an atmospheric temperature of 23°C and a tensile speed of 300 mm/min. The tensile elastic modulus can be calculated by performing a tensile test on the laminated film in the longitudinal direction (MD direction) and the width direction (TD direction) using the method described in examples. When the MD direction and the TD direction of the laminated film are unknown, the tensile elastic modulus can be calculated using the following method. First, the tensile test is performed 5 times for each of 4 directions at 45° intervals starting from an arbitrary direction in the film plane. Thereafter, the arithmetic average value in each direction is determined, and the arithmetic average value in the direction in which the tensile elastic modulus is the highest and in the direction at 90 ° to this direction (average of 10 times in total) is taken as the tensile elastic modulus of the laminated film of the present invention.

By setting the tensile elastic modulus at an atmospheric temperature of 23°C and a tensile speed of 300 mm/min to 80 MPa or more, it is possible to easily peel off the laminated film from the adherend after bonded to the adherend and after processed or used, and it is possible to suppress film breakage during peeling off. From the same viewpoint, the tensile elastic modulus at the atmospheric temperature of 23°C and the tensile speed of 300 mm/min is more preferably 100 MPa or more. By setting the tensile elastic modulus at the atmospheric temperature of 23°C and the tensile speed of 300 mm/min to 300 MPa or less, it is possible to suppress the laminated film of the present invention from floating from the adherend since the laminated film of the present invention follows the curved surface when bonded to the adherend having the curved surface shape. From the same viewpoint, the tensile elastic modulus at 23°C and 300 mm/min is more preferably 200 MPa or less.

The tensile elastic modulus can be adjusted by adjusting materials and thicknesses of the resin layer A and the substrate described later, and can be achieved by controlling the rigidity of the substrate particularly based on the raw material composition and film formation conditions described later. As a specific method of setting the tensile elastic modulus within a range from 80 MPa to 300 MPa at the atmospheric temperature of 23°C and the tensile speed of 300 mm/min, the same method as the method of setting the tear strength within the range from 0.490 N/mm to 9.80 N/mm can be preferably mentioned.

In the laminated film of the present invention, an arithmetic average waviness Wa of the surface of the laminated film on the resin layer A side is preferably less than 0.20 um. The arithmetic average waviness Wa is measured using the method described in examples. By setting the arithmetic average waviness Wa to less than 0.20 um, it is possible for the laminated film of the present invention to exert excellent bondability when bonded to the adherend having the curved surface shape. In particular, in the case of the adherend having the curved surface shape, such as a curved lens, a small contact area directly after bonding of the resin layer A to the adherend may cause the laminated film on the periphery of the lens to peel off and float. However, by setting the arithmetic average waviness Wa to less than 0.20 um, the adhesion directly after bonding is excellent, and peeling of the laminated film after bonding can be suppressed.

In addition, the arithmetic average waviness Wa is preferably 0.05 um or more from the viewpoint of the conveyability of the film at the time of production or processing, and the blocking suppression of the surface opposite to the surface on the resin layer A side when the laminated film is stacked and stored in a sheet or roll shape.

As described later, the arithmetic average waviness Wa can be controlled by adjusting the material to be used for the resin layer A, the peeling force on the surface opposite to the surface on the resin layer A side, and the production conditions of the laminated film. Examples of methods for lowering the arithmetic average waviness Wa include a method of selecting a combination of materials used for the resin layer A having excellent compatibility, a method of using a styrene-based elastomer having a wide molecular weight distribution as the material of the resin layer A, and a method of adding a lubricant component to the material of the resin layer A. In addition, one of the methods for producing the laminated film of the present invention is a method in which the laminated film is wound into a roll shape in a state where the surface opposite to the surface on the resin layer A side is laminated during production. In this case, when the laminated film is used, the surface opposite to the surface on the resin layer A side is peeled off. By reducing the peeling force at the time, deformation of the surface on the resin layer A side during peeling can be suppressed, and the arithmetic average waviness Wa can be lowered. From the same viewpoint, by increasing the cohesive force of the resin layer A, deformation of the surface on the resin layer A side during peeling can be suppressed, and the arithmetic average waviness Wa can be lowered. In addition, methods such as slowing the shear rate or increasing the extrusion temperature during melt extrusion of the resin layer A layer can also be preferably mentioned.

In the laminated film of the present invention, the adhesion force between the surface opposite to the surface on the resin layer A side and the low-melting-point alloy having a melting point of 47°C is preferably 30 N/78.5 mm$^2$ to 90 N/78.5 mm$^2$. The low-melting-point alloy referred to herein is "U-Alloy" (registered trademark) 47 manufactured by OSAKA ASAHI METAL MFG. CO., LTD.

The adhesion force with the low-melting-point alloy is measured using the method described in examples. By setting the adhesion force with the low-melting-point alloy to 30 N/78.5 mm$^2$ or more, it is possible to solve the problem such that the low-melting-point alloy block is peeled off when the laminated film of the present invention is bonded to the adherend having the curved surface, the low-melting-point alloy is cast on the surface opposite to the surface on the resin layer A side, then integrated with a lens, the block-shaped low-melting-point alloy is attached to a fixed shaft, and the rotated surface to be polished is pressed and polished. From the same viewpoint, the adhesion force between the surface opposite to the surface on the resin layer A side and the low-melting-point alloy having a melting point of 47°C is preferably 40 N/78.5 mm$^2$ or more, and more preferably 50 N/78.5 mm$^2$ or more. In addition, by setting the adhesion force with the low-melting-point alloy to 90 N/78.5 mm$^2$ or less, the low-melting-point alloy cast on the laminated film can be easily peeled off after lens polishing.

The adhesion force with the low-melting-point alloy can be controlled by materials of the resin layer A and the layer including the surface opposite to the surface on the resin layer A side, and film formation conditions, which will be described later. In particular, it can be achieved by controlling the adhesive properties of the resin layer A, the rigidity of the substrate, and surface properties of the layer including the surface opposite to the surface on the resin layer A side based on the raw material composition described later. As a specific method for setting the adhesion force between the surface opposite to the surface on the resin layer A side and the low-melting-point alloy having a melting point of 47°C to 30 N/78.5 mm$^2$ to 90 N/78.5 mm$^2$, for example, a method in which 80 mass% or more of an ethylene-acrylic acid copolymer and/or an ethylene-methacrylic acid copolymer is contained in 100 mass% of the layer including the surface opposite to the surface on the resin layer A side is preferably mentioned.

In the laminated film of the present invention, the 180° peeling force (hereinafter, described as peeling force after storage at 23°C) after the surface on the resin layer A side and the surface opposite to the surface on the resin layer A side of the laminated film are bonded at 23°C and 0.1 MPa and then stored at 23°C for 24 hours is preferably 5.0 N/25 mm or less, more preferably 4.0 N/25 mm or less, still more preferably 3.0 N/25 mm or less. From the viewpoint of handleability, a low peeling force is preferable, and no particular lower limit is set. However, in consideration that the surface on the side having the resin layer A is preferred to have the adhesiveness, the substantial lower limit is about 0.2 N/25 mm. When the peeling force after storage at 23°C is within the above preferable range, the laminated film of the present invention can be easily rolled out during use when the laminated film is wound into a roll shape without using the release liner. The peeling force after storage at 23°C is measured using the method described in examples.

As described later, the peeling force storage at 23°C can be controlled within the above preferable range by adjusting the material and the surface roughness of the layer including the surface opposite to the surface on the resin layer A side, and the rigidity of the substrate. Specifically, for example, it is preferable that the ten-point average roughness Rz of the surface opposite to the surface on the resin layer A side is 5 um or more, and the layer including the surface opposite to the surface on the resin layer A side contains a 4-methyl-1-pentene α-olefin copolymer.

The position of the resin layer A is not particularly limited, but is preferably disposed on at least one outermost layer of the laminated film of the present invention. By disposing the adhesive resin layer A on the outermost layer of the laminated film, the laminated film can be bonded to the adherend with the resin layer A interposed therebetween.

(Resin layer A)

The resin layer A is not particularly limited as long as the effect of the present invention is not impaired, and may contain an elastomer such as an acrylic elastomer, a silicone elastomer, a natural rubber elastomer or a synthetic rubber elastomer. It is preferable that a component after drying an insoluble matter (tetrahydrofuran insoluble matter) obtained when the resin layer A is extracted with tetrahydrofuran contains at least a styrene component as a monomer component, a storage elastic modulus G'(25) at 25°C and 1 Hz is 0.05 MPa to 0.9 MPa for the component after drying the insoluble matter, and a content of the insoluble matter in 100 mass% of the resin layer A is 50 mass% to 90 mass%. In addition, it is preferable that a component, after an excess amount of acetone is added to a solution obtained when the resin layer A is extracted with tetrahydrofuran, the generated insoluble matter (acetone insoluble matter) and the acetone soluble matter are centrifuged with a centrifuge, and the acetone soluble matter after the centrifugation is dried, contains a terpene-based resin, and when the resin layer A is 100 mass%, the content of the component after the acetone soluble matter is dried is 10 mass% to 50 mass%. Among them, it is more preferable that 50 mass% to 90 mass% of the styrene-based elastomer and 10 mass% to 50 mass% of the terpene-based resin are contained in 100 mass% of the resin layer A, and it is still more preferable that the storage elastic modulus G'(25) of the styrene-based elastomer at 25°C and 1 Hz is 0.05 MPa to 0.9 MPa. The extraction method and the analysis method of the tetrahydrofuran insoluble matter, the acetone soluble matter, and the acetone insoluble matter can be performed using the following methods.

First, the surface of the laminated film on the resin layer A side is made to face up, and the surface opposite to the surface on the resin layer A side is made to adhere closely to the inner side of a bat. Tetrahydrofuran is poured onto the resin layer A surface, and the resin layer A surface is immersed at a liquid temperature of 25°C for 10 minutes, and then the solution is collected and used as a single-sided extract (extraction area: 15 cm $\times$ 20 cm $\times$ 2 laminated films). Thereafter, the mixture is separated into a tetrahydrofuran insoluble matter and a tetrahydrofuran soluble matter by centrifugation. Next, acetone is added to the tetrahydrofuran soluble matter at a ratio of 50 L of acetone to 1 L of poured tetrahydrofuran, and centrifugation is performed to separate an acetone insoluble matter and an acetone soluble matter. The tetrahydrofuran insoluble matter, the acetone soluble matter, and the acetone insoluble matter are dried and the masses thereof are determined, and then the mass% of each sample when the mass of the resin layer A is taken as 100 mass% is calculated. Among them, $^1$H-NMR is performed for each of the tetrahydrofuran insoluble matter and the acetone insoluble matter, and peaks are identified to confirm the presence or absence of the styrene component. In addition, in the peak area ratio of each of the tetrahydrofuran insoluble matter and the acetone insoluble matter, the amount of the styrene component-containing material is calculated, and then multiplied by the mass% of the tetrahydrofuran insoluble matter and the mass% of the acetone insoluble matter respectively and summed to determine the content of the styrene-based elastomer in 100 mass% of the resin layer A.

Next, the tetrahydrofuran insoluble matter is dried and then melt-molded to a thickness of 1 mm to obtain a sample. For the measurement, a rheometer AR2000ex manufactured by TA Instruments is used, and dynamic shear deformation is performed at a frequency of 1Hz and a strain of 0.01% while lowering the temperature from 200°C to -20°C at a rate of 20°C/min and then raising the temperature from -20°C to 40°C at a rate of 10°C/ min, and the storage elastic modulus of the tetrahydrofuran insoluble matter sample at 25°C during the temperature raising process is evaluated. It is assumed that when the storage elastic modulus obtained by melt-mixing a product obtained by drying the tetrahydrofuran insoluble matter and a product obtained by drying the acetone insoluble matter, and performing melt molding and measurement in the same manner as in the above method is 0.05 MPa to 0.9 MPa, or when the storage elastic modulus G'(25) at 25°C and 1 Hz of the styrene-based elastomer of the styrene-based elastomer grasped from the raw material is 0.05 MPa to 0.9 MPa, the storage elastic modulus G' (25) at 25°C and 1 Hz of the styrene-based elastomer is 0.05 MPa to 0.9 MPa.

The product obtained by drying the acetone soluble matter is subjected to $^1$H-NMR, the ratio of the terpene-based resin is determined from the peak area ratio, and multiplied by weight% of the acetone soluble matter to determine the content of the terpene-based resin contained in the resin layer A.

According to the above aspect, it is also possible to reduce blocking when the laminated film is wound into a roll without using the release liner, while the laminated film has sufficient adhesiveness, few adhesive residues, and the surface opposite to the surface on the resin layer A side as in the above preferred aspect. Specifically, since the component after drying the insoluble matter obtained when the resin layer A is extracted with tetrahydrofuran has the storage elastic modulus G'(25) at 25°C and 1 Hz of 0.05 MPa to 0.9 MPa, the component itself can obtain some adhesiveness, and the component is a component having a property of few adhesive residues, and therefore it is also possible to easily roll out the laminated film of the present invention at the time of use when the laminated film is wound without using the release liner, while maintaining sufficient adhesiveness by containing the terpene-based resin together. In addition, by containing the terpene-based resin that does not have excessively high adhesive imparting property, it is possible to reduce adhesive residues when the laminated film is peeled off from the adherend, while maintaining sufficient adhesiveness.

Preferable examples of the method according to the above aspect include a method in which 50 mass% to 90 mass% of the styrene-based elastomer is contained and 10 mass% to 50 mass% of the terpene-based resin is contained in 100 mass% of the resin layer A. The styrene-based elastomer refers to a resin having the storage elastic modulus G'(25) at 25°C and 1 Hz of 10 MPa or less and containing at least a styrene component as a monomer component. As the styrene-based elastomer, for example, styrene-conjugated diene-based copolymers such as a styrene-butadiene copolymer (SBR), a styrene-isoprene-styrene copolymer (SIS), and a styrene-butadiene-styrene copolymer (SBS), and hydrogenated products thereof can be used. Specifically, for example, a hydrogenated styrene-butadiene copolymer (HSBR), a styrene-ethylene butylene-styrene triblock copolymer (SEBS), a styrene-ethylene butylene diblock copolymer (SEB), or a styrene-isobutylene-based copolymer can be suitably used. As the styrene-isobutylene-based copolymer, for example, a styrene-isobutylene-styrene triblock copolymer (SIBS), a styrene-isobutylene diblock copolymer (SIB), or a mixture thereof can be suitably used. Among the above, from the viewpoint of also reducing blocking when the laminated film is wound into a roll without using the release liner while the laminated film has sufficient adhesiveness, a property of few adhesive residues, and the surface opposite to the surface on the resin layer A side as in the above preferred aspect, it is more preferable to use one or more kinds selected from the styrene-conjugated diene-based copolymer such as the styrene-butadiene-styrene copolymer (SBS), the hydrogenated products thereof, and the styrene-isobutylene-based copolymer, and it is still more preferable to use the styrene-ethylene butylene-styrene triblock copolymer (SEBS). Only one kind of styrene-based elastomer may be used, or two or more kinds thereof may be used in combination.

From the viewpoint of suppressing the laminated film from floating from the adherend due to the failure to follow the curved surface so as to sufficiently protect the adherend when the laminated film of the present invention is bonded to the adherend having the curved surface shape, the storage elastic modulus G'(25) of the styrene-based elastomer at 25°C and 1 Hz is preferably 0.9 MPa or less, more preferably 0.7 MPa or less, and still more preferably 0.5 MPa or less. In addition, the storage elastic modulus G'(25) of the styrene-based elastomer is preferably 0.05 MPa or more, more preferably 0.1 MPa or more from the viewpoint of suppressing adhesive residues when the laminated film of the present invention is bonded to the adherend and peeled off after use.

The resin layer A preferably contains the styrene-based elastomer as a main component, and in particular, the content of the styrene-based elastomer in the resin layer A is more preferably 50 mass% or more and still more preferably 50 mass% or more when the total mass of the resin layer A is 100 mass%. The content of the styrene-based elastomer in the resin layer A is preferably 90 mass% or less, more preferably 85 mass% or less, still more preferably 80 mass% or less, and particularly preferably 65 mass% or less. The main component described herein refers to a component having the highest mass% among all the components constituting the resin layer A. By setting the content of the styrene-based elastomer in the resin layer A within the above preferred range, excellent adhesiveness and tackiness can be obtained when the laminated film of the present invention is used as a surface protective film.

The melt flow rate (measured under conditions of MFR, 230°C, and 2.16 kg) of the styrene-based elastomer is preferably 2 g/10 min or more, more preferably 4 g/10 min or more, still more preferably 10 g/10 min or more. The MFR of the styrene-based elastomer is preferably 60 g/10 min or less, more preferably 30 g/10 min or less, still more preferably 20 g/10 min or less. When the MFR of the styrene-based elastomer is within the above range, productivity is excellent, and when the laminated film of the present invention is used as a surface protective film, excellent adhesive properties can be exerted.

In addition, the content of the styrene component in the styrene-based elastomer is preferably 5 mass% or more, and more preferably 8 mass% or more when the total amount of the styrene-based elastomer is 100 mass%. In addition, the content of the styrene component in the styrene-based elastomer is preferably 55 mass% or less, and more preferably 40 mass% or less. By setting the content of the styrene component in the styrene-based elastomer within the above range, when the laminated film of the present invention is bonded to the adherend, it is possible to exert excellent adhesive properties such as bondability and suppression of adhesive residues.

The resin layer A in the present invention preferably contains a tackifier from the viewpoint of increasing the bondability to the adherend. As the tackifier, those known can be used in the present application, and for example, those generally used in the present application, such as petroleum resins such as aliphatic copolymers, aromatic copolymers, aliphatic/aromatic copolymers, and alicyclic copolymers, terpene-based resins, rosin-based resins, alkylphenol-based resins, xylene-based resins, or hydrogenated products thereof, can be used. Among them, aliphatic copolymers, aliphatic/aromatic copolymers, terpene-based resins, and hydrogenated products thereof are preferably used from the viewpoint of excellent compatibility with the styrene-based elastomer and increasing the polycarbonate probe tack maximum value F of the laminated film. Among them, from the viewpoint described above, terpene-based resins or hydrogenated products thereof can be more preferably used, and terpene phenol-based resins can be further preferably used as the terpene-based resins.

The content of the tackifier is preferably 10 mass% or more, and more preferably 15 mass% or more when the entire resin layer A is 100 mass%. In addition, the content of the tackifier is preferably 40 mass% or less, and more preferably 30 mass% or less when the entire resin layer A is 100 mass%. By setting the content of the tackifier to 10 mass% or more, the polycarbonate probe tack maximum value F at 23°C of the laminated film of the present invention can be increased, and excellent bondability to the adherend having the curved surface shape can be obtained. In addition, by setting the content of the tackifier to 40 mass% or less, it is possible to make adhesive residues less likely to occur at the time of peeling off after bonded to the adherend.

The resin layer A in the present invention may contain an olefin-based resin from the viewpoint of controlling the viscoelasticity of the resin layer to adjust the adhesive force, or from the viewpoint of obtaining excellent film formability. Examples of olefin-based resins include low density polyethylene, medium density polyethylene, high density polyethylene, linear low density polyethylene, low crystalline or amorphous ethylene-$\alpha$-olefin copolymers, crystalline polypropylene, low crystalline polypropylene, amorphous polypropylene, propylene-ethylene copolymers (random copolymers and/or block copolymers), propylene-$\alpha$-olefin copolymers, propylene-ethylene-$\alpha$-olefin copolymers, polybutene, 4-methyl-1-pentene-$\alpha$-olefin copolymers, ethylene-ethyl(meth)acrylate copolymers, ethylene-methyl(meth)acrylate copolymers, ethylene-n-butyl(meth)acrylate copolymers, and ethylene-vinyl acetate copolymers, and these may be used alone or in combination. The $\alpha$-olefin is not particularly limited as long as the $\alpha$-olefin can be copolymerized with ethylene or propylene, and preferable examples thereof include ethylene, propylene, 1-butene, 1-hexene, 4-methyl-1-pentene, 1-octene, 1-pentene, and 1-heptene.

Among the olefin-based resins described above, low density polyethylene, linear low density polyethylene, ethylene-$\alpha$-olefin copolymers, propylene-$\alpha$-olefin copolymers, polybutene, crystalline polypropylene, low crystalline polypropylene, amorphous polypropylene, or 4-methyl-1-pentene-$\alpha$-olefin copolymers are preferably used.

When an olefin-based resin is used for the resin layer A in the present invention, the content of the olefin-based resin is preferably 20 mass% or less, and more preferably 10 mass% or less, when the resin layer A is 100 mass%.

In the resin layer A in the present invention, other components such as resin components other than the styrene-based elastomer, the tackifier, and the olefin-based resin described above, and particles, fillers, and additives may be appropriately added as long as the object of the present invention is not impaired. Examples of the additives include a lubricant, a crystal nucleating agent, an antioxidant, a heat resistance imparting agent, a weathering agent, and an antistatic agent. These additives may be used alone or in combination, but the total content of these additives is preferably 3 mass% or less, and more preferably 2 mass% or less when the entire resin layer A is 100 mass%.

(Layer including surface opposite to surface on resin layer A side)

The laminated film of the present invention is a laminated film having at least the resin layer A and the substrate, and the layer including the surface opposite to the surface on the resin layer A side is a layer containing at least a resin and is a layer different from the resin layer A. For example, when the laminated film of the present invention has a two-layer structure of the resin layer A and the substrate, the layer including the surface opposite to the surface on the resin layer A side refers to the substrate. As another example, when the laminated film of the present invention has a three-layer structure of the resin layer A, the substrate, and the resin layer B, and the layers are laminated in this order, the layer including the surface opposite to the surface on the resin layer A side refers to the resin layer B. The layer including the surface opposite to the surface on the resin layer A side refers to a layer including a finite thickness, and preferably has releasability to such an extent that blocking does not occur when the layer is wound into a roll shape with respect to the surface on the side having the resin layer A of the laminated film.

The laminated film of the present invention preferably contains a polyolefin-based resin containing a carboxylic acid group and/or a polyolefin-based resin containing a metal carboxylate group in the layer including the surface opposite to the surface on the resin layer A side from the viewpoint of increasing adhesion to a low-melting-point alloy and suppressing blocking when the laminated film is wound into a roll shape while setting the polycarbonate probe tack maximum value F at 23°C on the surface on the resin layer A side to 0.098 N/mm$^2$ to 0.294 N/mm$^2$. The preferred composition and content of the polyolefin-based resin containing a carboxylic acid group and/or the polyolefin-based resin containing a metal carboxylate group are as described above, and it is preferable to contain an ethylene-acrylic acid copolymer having an acid content of 6 mass% to 15 mass% as determined by FT-IR measurement and/or an ethylene-methacrylic acid copolymer having an acid content of 6 mass% to 15 mass% as determined by FT-IR measurement in total 90 mass% or less, and more preferably in 80 mass% or less.

By setting the content of the polyolefin-based resin containing a carboxylic acid group and/or the polyolefin-based resin containing a metal carboxylate group in the layer including the surface opposite to the surface on the resin layer A side within the above preferred range, when the laminated film of the present invention is used as a surface protective film, blocking with the resin layer A can be suppressed and the laminated film can be easily rolled out when the laminated film is wound into a roll shape while maintaining excellent adhesion to the low-melting-point alloy cast on the layer including the surface opposite to the surface on the resin layer A side.

The layer including the surface on the side opposite to the surface on the resin layer A side in the present invention may contain an olefin-based resin from the viewpoint of adjusting adhesion to the low-melting-point alloy and adhesiveness to the resin layer A when wound into a roll shape, and from the viewpoint of obtaining excellent conveyability and handleability at the time of use.

Examples of olefin-based resins include low density polyethylene, medium density polyethylene, high density polyethylene, linear low density polyethylene, low crystalline or amorphous ethylene-$\alpha$-olefin copolymers, crystalline polypropylene, low crystalline polypropylene, amorphous polypropylene, propylene-ethylene copolymers (random copolymers and/or block copolymers), propylene-$\alpha$-olefin copolymers, propylene-ethylene-$\alpha$-olefin copolymers, poly-butene, and 4-methyl-1-pentene-$\alpha$-olefin copolymers, and these may be used alone or in combination. The $\alpha$-olefin is not particularly limited as long as the $\alpha$-olefin can be copolymerized with ethylene or propylene, and preferable examples thereof include ethylene, propylene, 1-butene, 1-hexene, 4-methyl -1 pentene, 1-octene, 1-pentene, and 1-heptene.

Among the olefin-based resins described above, one or more kinds selected from low density polyethylene, linear low density polyethylene, ethylene-$\alpha$-olefin copolymers, propylene-$\alpha$-olefin copolymers, polybutene, crystalline polypropylene, low crystalline polypropylene, amorphous polypropylene, and 4-methyl-1-pentene-$\alpha$-olefin copolymers are preferably used.

In the case of using the olefin-based resin for the layer including the surface opposite to the surface on the resin layer A side in the present invention, the content thereof is preferably 60 mass% or less, more preferably 40 mass% or less, and still more preferably 20 mass% or less when the content of the layer including the surface opposite to the surface on the resin layer A side is 100 mass%.

The melt flow rate (measured under conditions of MFR, 190°C, and 2.16 kg) of the olefin-based resin is preferably 0.5 g/10 min or more, more preferably 1.0 g/10 min or more, still more preferably 2.0 g/10 min or more from the viewpoint of productivity, and stability at the time of lamination with an adjacent layer, and the like. From the same viewpoint as described above, the MFR of the olefin-based resin is preferably 30 g/10 min or less, more preferably 25 g/10 min or less, still more preferably 20 g/10 min or less.

In the laminated film of the present invention, components for increasing releasability and lubricity, such as olefin-based resins containing a 4-methyl-1-pentene unit, silicone-based resins, fluorine-based resins, fatty acid metal salts, fatty acid amides, inorganic particles, and organic particles, may be further added to the layer including the surface opposite to the surface on the resin layer A side.

Among them, it is preferable to contain an olefin-based resin containing a 4-methyl-1-pentene copolymer from the viewpoint of suppressing blocking with the resin layer A and further suppressing contamination in the processing step when the laminated film of the present invention is wound into a roll shape.

Examples of the olefin-based resins containing a 4-methyl-1-pentene unit referred to in the present invention include "TPX" (registered trademark) DX310, "TPX" (registered trademark) DX231, "TPX" (registered trademark) MX004, "ABSORTOMER" (registered trademark) EP-1013, and "ABSORTOMER" (registered trademark) EP-1001 manufactured by Mitsui Chemicals, Inc. Among them, the 4-methyl-1-pentene/$\alpha$-olefin copolymer as disclosed in JP 2013-194132A is preferably used. The content of the olefin-based resin containing the 4-methyl-1-pentene unit is preferably 2 mass% or more, more preferably 5 mass% or more, and still more preferably 10 mass% or more in 100 mass% of the layer including the surface opposite to the surface on the resin layer A side. In addition, the content of the 4-methyl-1-pentene $\alpha$-olefin copolymer is preferably 30 mass% or less, and more preferably 20 mass% or less in 100 mass% of the layer including the surface opposite to the surface on the resin layer A side from the viewpoint of securing adhesion to the low-melting-point alloy. By containing the olefin-based resin containing the 4-methyl-1-pentene copolymer in the layer including the surface opposite to the surface on the resin layer A side, when the laminated film of the present invention is used as a surface protective film, blocking with the resin layer A can be suppressed and the laminated film can be easily rolled out when the laminated film is wound into a roll shape while maintaining excellent adhesion to the low-melting-point alloy cast on the layer including the surface opposite to the surface on the resin layer A side.

The material constituting the layer including the surface opposite to the surface on the resin layer A side is preferably added with a lubricant such as a fatty acid metal salt, a fatty acid amide, inorganic particles, or organic particles from the viewpoint of setting the ten-point average roughness Rz of the surface opposite to the surface on the resin layer A side to 5 um or more. In particular, it is preferable to use inorganic particles or organic particles from the viewpoint of improving the conveyability and the rolling out property from a rolled state. Specifically, as a method for setting the ten-point average roughness Rz of the surface opposite to the surface on the resin layer A side to 5 um or more, for example, it can be preferable that the material constituting the resin layer including the surface opposite to the surface on the resin layer A side contains organic particles composed of ultra-high molecular weight polyethylene in an amount of 0.5 mass% to 5 mass% when the total mass of the resin layer including the surface opposite to the surface on the resin layer A side is 100 mass%. When the organic particles composed of ultra-high molecular weight polyethylene are used, the organic particles are highly compatible with the layer including the surface opposite to the surface on the resin layer A side as compared with other particles, so that the organic particles are easily dispersed, and are less likely to fall off in a conveyance step or a use step for a customer. In particular, the average particle diameter of the organic particles is preferably 1 um to 20 um from the viewpoint of improving the conveyability and the rolling out property from a rolled state, and setting the ten-point average roughness Rz of the surface opposite to the surface on the resin layer A side to 5 um or more. From the same viewpoint, the thickness is more preferably 5 um to 20 $\mu$m, still more preferably 9 um to 20 um. When the average particle diameter is less than 1 $\mu$m, the surface roughness of the layer including the surface opposite to the surface on the resin layer A side may be small, and the conveyability and the rolling out property from a rolled state may be insufficient. When the average particle diameter exceeds 20 μm, there are cases where blocking is worsened and rolling out becomes difficult due to protrusions of the layer including the surface opposite to the surface on the resin layer A side penetrating into the resin layer A at the time of winding into a roll shape, or where the adhesive force of the resin layer A decreases due to the projections being transferred to the resin layer A. From the same viewpoint, the content of the particles is more preferably 0.5 to 4 mass% and still more preferably 1 mass% to 2 mass% when the entire layer including the surface opposite side of the resin layer A is 100 mass%. When the content is less than 0.5 mass%, the surface roughness is reduced, and the conveyability and the rolling out property from the rolled state may be deteriorated. When the content is more than 5 mass%, there are cases where blocking occurs and rolling out becomes difficult due to protrusions of the layer including the surface opposite to the surface on the resin layer A side penetrating into the resin layer A, or where the adhesive force decreases due to the surface roughness of the surface on the resin layer A side becoming larger as the particle protrusion shape is transferred to the surface on the resin layer A side.

Here, in the method for measuring the average particle diameter of the inorganic particles and the organic particles, the equivalent circle diameter of the particles obtained by image processing from a transmission electron micrograph is used, the equivalent circle diameters of 50 particles are measured, and the average value thereof is taken as the average particle diameter. The ultrahigh molecular weight polyethylene referred to herein refers to polyethylene having a weight average molecular weight of 1 million or more measured by gel permeation chromatography.

In the present invention, fine particles "MIPELON" (registered trademark) PM-200 can be preferably used as the ultra-high molecular weight polyethylene.

In addition, the thickness of the laminated film of the present invention is preferably 15 um or more, and more preferably 30 um or more, from the viewpoint of conveyability and productivity during production and use. In addition, the thickness of the laminated film is preferably 250 um or less from the viewpoint of followability to the adherend in addition to the same viewpoint as described above.

The film roll of the present invention is preferably a film roll in which the laminated film has a roll shape in a state where the surface on the side having the resin layer A and the surface of the layer on the opposite side are in contact with each other. By adopting such an aspect in which no release liner is used, the step of peeling the release liner at the time of use can be omitted, the amount of waste can be further reduced, and since the release liner is not bonded, the use area of the surface protective film per roll is increased, and the number of times of replacement of the roll product is reduced.

(Substrate)

A preferred embodiment of the laminated film of the present invention has a substrate. Here, the substrate refers to a sheet-like material having a finite thickness. A preferable aspect is that the substrate in the present invention is disposed on the outermost layer opposite to the surface on the resin layer A side, and served as the layer including the surface opposite to the surface on the resin layer A side. However, it is more preferable to have a three-layer structure of the resin layer A, the substrate, and the resin layer B. In this case, the material of the substrate is not particularly limited, and for example, an olefin-based resin or an ester-based resin can be used, and among them, an olefin-based resin is preferably used as a main component from the viewpoint of productivity and processability. The main component described herein refers to a component having the highest mass% among all the components constituting the substrate.

Examples of the olefin-based resin contained as a main component in the substrate include low density polyethylene, medium density polyethylene, high density polyethylene, linear low density polyethylene, low crystalline or amorphous ethylene-α-olefin copolymers, polypropylene, propylene-α-olefin copolymers, propylene-ethylene-α-olefin copolymers, ethylene-ethyl(meth)acrylate copolymers, ethylene-methyl(meth)acrylate copolymers, ethylene-n-butyl(meth)acrylate copolymers, and ethylene-vinyl acetate copolymers, and among these, particularly ethylene-based resins such as low density polyethylene, medium density polyethylene, high density polyethylene, linear low density polyethylene, low crystalline or amorphous ethylene-α-olefin copolymers, ethylene-ethyl(meth)acrylate copolymers, ethylene-methyl(meth)acrylate copolymers, ethylene-n-butyl(meth)acrylate copolymers, and ethylene-vinyl acetate copolymers can be preferably used. These may be used alone or in combination.

In particular, examples of the olefin-based resin suitable for the laminated film of the present invention may preferably include a method containing, as a main component, low density polyethylene having a density of 910 kg/m$^3$ to 940 kg/m$^3$, medium density polyethylene, linear low density polyethylene, or the like. Among them, it is particularly preferable to use low density polyethylene having a density of 910 kg/m$^3$ to 940 kg/m$^3$. By using low density polyethylene having a density of 910 kg/m$^3$ to 940 kg/m$^3$, the rigidity of the substrate can be controlled, and the laminated film follows the curved surface so that the laminated film can be suppressed from floating from the adherend when the laminated film of the present invention is bonded to the adherend having the curved surface shape.

From the viewpoint of controlling the tear strength and the rigidity, it is more preferable to use low density polyethylene having a density of 920 kg/m$^3$ to 940 kg/m$^3$. By using low density polyethylene having a density of 920 kg/m$^3$ to 940 kg/m$^3$, the laminated film follows the curved surface so that the laminated film can be suppressed from floating from the adherend when the laminated film of the present invention is bonded to the adherend having the curved surface shape, and film breakage can be suppressed when the laminated film bonded to the adherend is peeled off. The $\alpha$-olefin is not particularly limited as long as the $\alpha$-olefin can be copolymerized with propylene or ethylene, and preferred examples thereof include 1-butene, 1-hexene, 4-methyl -1 pentene, 1-octene, 1-pentene, and 1-heptene.

The melt flow rate (measured under conditions of MFR, 190°C, and 2.16 kg) of the olefin-based resin suitable for the substrate in the present invention is preferably 1.0 g/10 min or more, more preferably 2.0 g/10 min or more, still more preferably 3.0 g/10 min or more from the viewpoint of productivity, and stability at the time of lamination with an adjacent layer, and the like. The MFR of the resin used for the substrate is preferably 30 g/10 min or less, more preferably 25 g/10 min or less, still more preferably 20 g/10 min or less from the same viewpoint as described above.

The substrate in the present invention preferably contains the olefin-based elastomer. Examples of the olefin-based elastomer suitable for such a substrate include amorphous polypropylene, low crystalline polypropylene, amorphous polybutene, and a 4-methyl-1-pentene $\alpha$-olefin copolymer, and amorphous polypropylene and the 4-methyl-1-pentene $\alpha$-olefin copolymer are preferably used. In particular, the use of a 4-methyl-1-pentene $\alpha$-olefin copolymer is preferable because, for example, when the laminated film is bonded to the adherend having the curved surface shape, it is possible to suppress the floating of the laminated film from the adherend due to the failure to follow the curved surface.

The content of the olefin-based elastomer in the substrate in the present invention is preferably 5 mass% or more, more preferably 10 mass% or more, and still more preferably 20 mass% or more when the substrate is 100 mass% from the viewpoint of improving the bondability when the laminated film of the present invention is bonded to the adherend having the curved surface shape. By setting the content of the olefin-based elastomer in the substrate to 5 mass% or more, excellent bondability to the curved surface can be exerted when the laminated film of the present invention is bonded to the adherend having the curved surface shape. In addition, the content of the olefin-based elastomer in the substrate is preferably 40 mass% or less, and more preferably 30 mass% or less, from the viewpoint of not excessively decreasing the tensile elastic modulus of the laminated film and securing handleability during production and use.

The substrate in the present invention preferably contains the styrene-based elastomer. That is, the substrate of the laminated film of the present invention more preferably contains an olefin-based resin and a styrene-based elastomer, further preferably contains the olefin-based elastomer and an olefin-based resin excluding the olefin-based elastomer, and particularly preferably contains the olefin-based elastomer, an olefin-based resin excluding the olefin-based elastomer, and a styrene-based elastomer.

The containing of the styrene-based elastomer in the substrate improves the affinity between the substrate and the resin layer A and increases the interfacial adhesion between the substrate and the resin layer A when the styrene-based elastomer is used in the resin layer A. The content of the styrene-based elastomer in the substrate is preferably 1 mass% or more, and more preferably 2 mass% or more when the total mass of the substrate is 100 mass%. The content of the styrene-based elastomer in the substrate is preferably 20 mass% or less, and more preferably 10 mass% or less. As the styrene-based elastomer used for the substrate in the present invention, a known styrene-based elastomer can be used, and for example, the same styrene-based elastomer as the styrene-based elastomer suitable for the resin layer A described above can be used.

Examples of the method for containing the styrene-based elastomer in the substrate in the present invention include a method in which the present laminated film containing the styrene-based elastomer in the resin layer A is recovered and remanufactured, and the obtained recovered raw material is added to the substrate, and adopting this method is a preferable method from the viewpoint of resin recycling and reduction in production cost.

Furthermore, various additives such as a crystal nucleating agent, a lubricant, an antioxidant, a weathering agent, an antistatic agent, and a pigment may be appropriately added to the substrate in the present invention as long as the characteristics as the laminated film of the present invention are not impaired. The substrate in the present invention may further contain an easily adhesive component for favorably laminating the substrate with the resin layer A in the present invention.

The thickness of the substrate constituting the laminated film of the present invention can be appropriately adjusted in accordance with the required characteristics of the laminated film, and is preferably 10 um or more, more preferably 20 um or more, still more preferably 40 um or more from the viewpoint of conveyability during production and use and productivity. The thickness of the substrate constituting the laminated film is preferably 200 um or less from the same viewpoint as described above.

The laminated film of the present invention preferably has the resin layer A, the substrate, and the layer including the surface opposite to the surface on the resin layer A side in this order. The position of the layer including the surface opposite to the surface on the resin layer A side is not particularly limited, but is preferably disposed on at least one outermost layer of the laminated film of the present invention. When the layer including the surface opposite to the surface on the resin layer A side having adhesiveness is disposed as the outermost layer of the laminated film, the laminated film can be bonded to the adherend with the layer including the surface opposite to the surface on the resin layer A side interposed therebetween.

Next, a method for producing the laminated film of the present invention will be described.

The method for producing the laminated film of the present invention is not particularly limited, and for example, in the case of a three-layer lamination configuration having the resin layer A, the substrate, and the layer (resin layer B) including the surface opposite to the surface on the resin layer A side in this order, a socalled coextrusion method in which resin compositions constituting each of the layers are melt-extruded from an individual extruder and laminated and integrated in a spinneret, a method in which the resin layer A, the substrate, and the layer including the surface opposite to the surface on the resin layer A side each are melt-extruded individually and then laminated by a lamination method, and the like can be mentioned, but the laminated film of the present invention is preferably produced by the coextrusion method from the viewpoint of productivity. The materials constituting each layer may be mixed by a Henschel mixer or the like, or may be kneaded with all or some of the materials of each layer in advance. As the coextrusion method, known methods such as an inflation method or a T-die method are used, but a hot-melt coextrusion method by a T-die method is particularly preferable from the viewpoint of excellent thickness accuracy and surface shape control.

In the case of production by the coextrusion method, the components of the resin layer A, the substrate, and the layer including the surface opposite to the surface on the resin layer A side can be extruded from individual melt extruders, laminated and integrated in a T-die, and coextruded. Then, the resultant is cooled and solidified with a metal cooling roll, molded into a film shape, and wound into a roll shape, whereby a laminated film can be obtained. The form when the laminated film is wound into a roll shape is not particularly limited, and only the laminated film may be wound, or the laminated film may be wound into a roll shape after a release liner is separately bonded to the resin layer A side of the laminate film. However, from the viewpoint of cost and productivity, a method of winding only the laminated film of the present invention into a roll shape is more preferable, in which the layer surfaces, including the surface on the side having the resin layer A and the opposite surface, in this case the surface opposite to the surface on the resin layer A side, are in contact.

The laminated film of the present invention can be used as a surface protective film for preventing scratches and dirt adhesion during production, processing, and transportation of a synthetic resin plate, a metal plate, a glass plate, and the like. In particular, the laminated film of the present invention can be preferably used as a surface protective film by being bonded to the adherend having the curved surface shape, such as a lens for optical equipment and glasses. Among them, the laminated film can be most preferably used as a surface protective film for glasses lenses.

In the present invention, the molded body preferably has the laminated film of the present invention from the viewpoint of preventing scratches and dirt adhesion during production, processing, and transportation. Examples of the molded body include a synthetic resin plate, a metal plate, and a glass plate.

In the present invention, the step of producing a molded body preferably includes a step of bonding the laminated film of the present invention, a step of processing a molded body, and a step of peeling off the laminated film in this order.

Examples of the processing include cutting, punching, bending, polishing, surface modification, bonding, and lamination.

When the laminated film of the present invention is used as a surface protective film for glasses lenses, the laminated film can be used, for example, in the following process. In addition, in a lens for glasses, polishing required for surface finishing is performed. In the polishing processing, a method is used in which a low-melting-point alloy is cast on the back side of a lens surface to be polished so as to be integrated with the lens, the block-shaped low-melting-point alloy is attached to a fixed shaft, and the rotated surface to be polished is pressed for polishing. At that time, before casting the low-melting-point alloy, a removable surface protective film is attached to the back surface in order to protect the lens surface and secure adhesion to the alloy. The adhesive surface of the surface protective film has an action of adhering to the back surface of the lens during polishing and easily peeling off after the polishing process, and the surface opposite to the adhesive surface of the surface protective film has an action of having heat resistance that allows casting of the low-melting-point alloy at a temperature more than or equal to the melting point of the alloy and adhering to the alloy as the alloy cools and solidifies.

EXAMPLES

Hereinafter, the present invention will be described more specifically with reference to examples, but the present invention is not limited to these examples. Measurement and evaluation of various physical properties are performed using the following methods, and those not particularly described are performed in a room at 23°C.

(1) Thickness

Using a microtome method, an ultrathin section having a width of 5 mm and having a cross section in the width direction - thickness direction of the laminated film was prepared, and the cross section was coated with platinum to provide an observation sample. Next, using a field emission scanning electron microscope (S-4800) manufactured by Hitachi, Ltd., the cross section of the laminated film was observed at an acceleration voltage of 2.5 kV, and the thicknesses of the substrate, the resin layer A, and the layer including the surface opposite to the surface on the resin layer A side, were measured from any point in the observed image. The observation magnification was set to 5,000 times when the thicknesses of the resin layer A and the surface opposite to the surface on the resin layer A side were measured, and 1,000 times when the thickness of the substrate was measured. Furthermore, the same measurement was performed 10 times in total, and the arithmetic average value of each was used as the thickness of each of the substrate, the resin layer A, and the layer including the surface opposite to the surface on the resin layer A side.

(2) Melt flow rate (MFR)

Using a melt indexer manufactured by Toyo Seiki Seisaku-sho, Ltd., in accordance with JIS K7210-1(2014), the MFR of the raw materials used in examples and comparative examples was measured under the conditions of a temperature of 230°C and a load of 2.16 kg or under the conditions of a temperature of 190°C and a load of 2.16 kg.

(3) Shear storage elastic modulus

Pellets composed of the styrene-based elastomer and the olefin-based elastomer alone used in examples and comparative examples were melt-molded to a thickness of 1 mm to provide a sample. For the measurement, a rheometer AR2000ex manufactured by TA Instruments was used, and dynamic shear deformation was performed at a frequency of 1Hz and a strain of 0.01% while lowering the temperature from 200°C to -20°C at a rate of 20°C/min and then raising the temperature from -20°C to 40°C at a rate of 10°C/ min, and the storage elastic modulus G'(25) at 25°C during the temperature raising process was evaluated.

(4) Polycarbonate probe tack maximum value F

The cut sample was aged in an atmosphere at 23°C for 24 hours, a tacking tester TAC 1000 manufactured by RHESCA Co., LTD. was used, the surface of the laminated film on the resin layer A side and a polycarbonate probe having a diameter of 5 mm were brought into contact with each other under the following conditions, and thereafter, the maximum load at a time of peeling off was read and divided by the area of the probe, and then the stress per unit area was calculated. The test was performed 5 times for one kind of the laminated film, and the average value thereof was taken as the probe tack maximum value F on the resin layer A side of the laminated film.

Temperature: 23°C
Retention time after sample mounted: 5 minutes
Contact speed and peeling speed: 2 mm/sec
Pressing load: 300 gf
Contact time: 2 seconds
Probe model number: Probe $\varphi$ 5 mm PC for tacking tester (TAC 1000).

(5) Ten-point average roughness Rz

The ten-point average roughness Rz was measured in accordance with JIS B0601-1994 using a high-precision fine shape measuring instrument (SURFCORDER ET4000A) manufactured by Kosaka Laboratory Ltd. under the following measurement conditions. The measurement was performed 3 times in each direction for one kind of laminated film, and the arithmetic average value measured 6 times in total was used.

Measurement range: 0.2 mm in longitudinal direction (MD direction), 2 mm in width direction (TD direction)
Measurement pitch: 10 um in longitudinal direction (MD direction), 0.2 um in width direction (TD direction)
Stylus: diamond needle having a tip radius of 2.0 um
Load: 100 $\mu$N
Cut-off: 0.8 mm.

(6) Tear strength (Elmendorf tear method)

In accordance with JIS K 7128-2(1998), the laminated film is cut into a size of 63 mm in width $\times$ 75 mm in length, and 16 sheets of the cut films are stacked. The stacked film was measured for tear strength when the film was torn with a pendulum using an Elmendorf tear tester manufactured by Toyo Seiki Seisaku-sho, Ltd. Note that the measurement was performed 5 times in each of the longitudinal direction (MD direction) and the width direction (TD direction) of the laminated film, and the arithmetic average value (average value for a total of 10 times) was taken. Since the measured value was a value of 16 sheets, it was divided by 16 and converted into a value of 1 sheet.

(7) Tensile elastic modulus

Using a tensile tester (universal tester "Tensilon" (registered trademark) manufactured by ORIENTEC CO., LTD.), a tensile test was performed 5 times in each of the longitudinal direction (MD direction) and the width direction (TD direction) of the laminated film at a temperature of 23°C and a speed of 300 mm/min in accordance with JIS K 7113-1995, and the arithmetic average value thereof was taken as the tensile elastic modulus of the laminated film. The test piece used for the measurement was a strip type having a width of 10 mm and a length of 100 mm, and the measurement was performed with a distance between chucks of 50 mm.

(8) Arithmetic average waviness Wa

The measurement was performed using a scanning white interference microscope "VS1540" (manufactured by Hitachi High-Tech Science Corporation, measurement conditions and device configuration as described below), the imaging screen was complemented (completely complemented) with an attached analysis software, the surface was corrected by polynomial fourth order approximation, and then the surface shape was obtained by processing with a median filter ($3 \times 3$ pixels). The obtained surface shape was filtered by a Gaussian filter (cut-off value 50 um) to output a waviness image in which a short-wavelength component was removed. The arithmetic average waviness Wa was obtained from the obtained waviness image according to the following formulas.

<Formulas of arithmetic average waviness Wa>

Assuming that the height of the point (x, y) of the waviness image is Zw (x, y), the measurement range in the x direction is lx, the measurement range in the y direction is ly, and the average value of the heights of the waviness image is Ave (Zw),

[Mathematical formula 1]

$$\mathrm{Wa} = \left\{ \iint |\mathrm{Zw}(\mathrm{x}, \mathrm{y}) - \mathrm{Ave}(\mathrm{Zw})| \mathrm{dxdy} \right\} / (\mathrm{lx} \times \mathrm{ly})$$

In the formula,

[Mathematical formula 2]

$$\mathrm{Ave}(\mathrm{Zw}) = \left\{ \iint \mathrm{Zw}(\mathrm{x}, \mathrm{y}) \mathrm{dxdy} \right\} / (\mathrm{lx} \times \mathrm{ly})$$

The measurement was performed on the surface of the laminated film on the resin layer A side, the intersection of the diagonal lines of the laminated film cut into a square shape of 5 cm $\times$ 5 cm was set as a start point, measurement is performed at a total of nine measurement positions according to the following procedure, Wa at each measurement position was determined according to the above procedure, and the arithmetic average value was adopted as Wa.

<How to determine measurement positions>

Measurement 1: Position of starting point
Measurement 2: 3.0 mm right from the starting point
Measurement 3: 6.0 mm right from the starting point
Measurement 4: 3.0 mm below the starting point
Measurement 5: 3.0 mm below and 3.0 mm right from the starting point
Measurement 6: 3.0 mm below and 6.0 mm right from the starting point
Measurement 7: 6.0 mm below the starting point
Measurement 8: 6.0 mm below and 3.0 mm right from the starting point
Measurement 9: 6.0 mm below and 6.0 mm right from the starting point

<Measurement conditions and device configuration>

Objective lens: 10x
Lens barrel: 1x
Zoom lens: 1x
Wavelength filter: 530 nm white
Measurement mode: Wave
Measurement software: VS-Measure 10.0.4.0
Analysis software: VS-Viewer 10.0.3.0
Measurement area: 1009.7 um $\times$ 1010.5 um
Number of pixels: 1842 $\times$ 1844.

(9) Adhesion force to low-melting-point alloy

A polycarbonate plate ("Panlite" (registered trademark) PC-1151 manufactured by TEIJIN LIMITED, thickness: 0.5 mm) with a length of 5 cm and a width of 5 cm was bonded to each of the surface of the laminated film on the resin layer A side in each of examples and comparative examples, which had been stored for 24 hours under the conditions of a temperature of 23°C and a relative humidity of 50%, at a bonding pressure of 0.35 MPa using a roll press machine (special pressure-bonding roller manufactured by YASUDA SEIKI SEISAKUSHO, LTD.). Next, the bonded sample was stored in a room at 23°C for 24 hours, a cylindrical frame molded with a resin having an inner diameter of 10 mm (cross-sectional area: 78.5 mm$^2$) and a height of 20 mm was placed on the surface opposite to the surface on the resin layer A side, and a low-melting-point alloy ("U-Alloy" (registered trademark) 47 manufactured by Osaka Asahi Metal Mfg. Co., Ltd.) melted at 80°C was poured into the frame to a height of 10 mm. Thereafter, it was stored in a room at 23°C for 1 hour to solidify the low-melting-point metal, and then the frame was removed from the low-melting-point metal.
Next, the lower part of the bonded sample was gripped by the lower chuck of a tensile tester (universal tester "Tensilon" (registered trademark) manufactured by ORIENTEC CO., LTD.), and a low-melting-point metal alloy portion, 1 mm vertically away from the surface opposite to the surface on the resin layer A side, was gripped by a loop unit of a metal wire having a loop portion. Thereafter, the metal wire was pulled upward in parallel with the surface opposite to the surface on the resin layer A side at a tensile speed of 50 mm/min to peel off the low-melting-point alloy, and the maximum value of the peeling force is obtained. The above test was performed 5 times for one kind of laminated film, and the arithmetic average value thereof was calculated.

(10) Peeling force after storage at 23°C

The surface on the resin layer A side of the laminated film cut in a size of 150 mm in the MD direction and 25 mm in the TD direction and a stainless steel plate (SUS430BA treatment, thickness 0.5 mm) having a length of 200 mm and a width of 40 mm were bonded at 23°C and a bonding pressure of 0.1 MPa using a roll press machine (special pressure-bonding roller manufactured by YASUDA SEIKI SEISAKUSHO, LTD.). Next, the surface on the resin layer A side of the laminated film cut in a size of 150 mm in the MD direction and 25 mm in the TD direction was stacked on the surface opposite to the surface on the resin layer A side of the bonded sample, and the stacked film was bonded at 23°C and a bonding pressure of 0.1 MPa using a roll press machine (special pressure-bonding roller manufactured by YASUDA SEIKI SEISAKUSHO, LTD.). Thereafter, in the two stacked laminated films, 50 mm of the laminated film that was not in contact with the stainless steel plate was peeled off. Next, after storage in a room at 23°C for 24 hours, using a tensile tester (universal tester "Tensilon" (registered trademark) manufactured by ORIENTEC CO., LTD.), the stainless steel plate was gripped by the lower chuck, the portion where the laminated film was peeled off by 50 mm was gripped by the upper chuck, and the peeling test in the MD direction was performed at a tensile speed of 300 mm/min and a peeling angle of 180°. One kind of laminated film was subjected to the test 5 times, and the arithmetic average value thereof was taken as the peeling force after storage at 23°C of the laminated film.

(11) Curved surface followability

The laminated film was cut into a size of 150 mm in the MD direction and 100 mm in the TD direction, and then placed on an SUS jig having an opening with a diameter of 80 mm in a manner that the surface side opposite to the surface on the resin layer A side of the laminated film was downward, and both end surfaces in the TD direction were fixed with jigs. Thereafter, a polycarbonate lens having a diameter of 80 mm and a curvature of 19 $m^{-1}$ was pressed against the surface (upper side) of the laminated film on the side having the resin layer A at 50 N from above the opening to bond the laminated film and the lens, and then an extra laminated film around the lens was removed with a cutter. After bonding, the laminated film was stored in a room at 23°C for 10 minutes, and the bonding state was observed and evaluated according to the following 5 grades. 5: No floating occurs around the lens or the floating occurs only within 2 mm from the lens periphery to the inner side.

    4: Floating occurs within 5 mm but more than 2 mm from the lens periphery to the inner side.
    3: Floating occurs within 10 mm but more than 5 mm from the lens periphery to the inner side.
    2: Floating occurs within 20 mm but more than 10 mm from the lens periphery to the inner side.
    1: Floating occurs more than 20 mm from the lens periphery or the laminated film does not adhere closely to the lens.

(12) Contamination state

The sample obtained in the above (11) was stored in a thermo-hygrostat bath at a temperature of 60°C and a humidity of 90 RH% for 48 hours, then stored in a room at a temperature of 23°C for 1 hour, and thereafter the laminated film was peeled off by hand, and then the contamination state of the surface of the polycarbonate lens was visually confirmed, and the area of the contaminated portion in the peeled area of 100% was determined, and evaluation was performed in 5 grades as follows.

    A: Area of the contaminated portion is less than 1%
    B: Area of the contaminated portion is 1% or more and less than 5%
    B⁻: Area of the contaminated portion is 5% or more and less than 10%
    C: Area of the contaminated portion is 10% or more and less than 40%
    D: Area of the contaminated portion is 50% or more.

<Raw materials>

•   G1645: Styrene-based elastomer

    (SEBS manufactured by Kraton Corporation, "Clayton"
    (registered trademark) G1645, MFR: 3.3 g/10 min (measured at 230°C), G'(25): 0.4 MPa)

•   H1052: Styrene-based elastomer

    (SEBS manufactured by Asahi Kasei Corp., "Tuftec"
    (registered trademark) H1052, MFR: 13 g/10 min (measured at 230°C), G'(25): 1.8 MPa)

•   G1657: Styrene-based elastomer

    (SEBS manufactured by Kraton Corporation, "Clayton"
    (registered trademark) G1657, MFR: 9 g/10 min (measured at 230°C), G'(25): 1.0 MPa)

•   8903P: Styrene-based elastomer

    (SEBS manufactured by JSR Corporation, "DYNARON"
    (registered trademark) 8903P, MFR: 10 g/10 min (measured at 230°C), G'(25): 1.0 MPa)

- 062H: Styrene-based elastomer

   (SIBS manufactured by KANEKA CORPORATION, "Sibster"
   (registered trademark) 062H, MFR: 50 g/10 min (measured at 230°C), G'(25): 0.3 MPa)

- S1613: Styrene-based elastomer

   (SEES manufactured by Asahi Kasei Corp., "S.O.E"
   (registered trademark) S1613, MFR: 14 g/10 min (measured at 230°C), G'(25): 0.7 MPa)

- 062M: Styrene-based elastomer

   (SIBS manufactured by KANEKA CORPORATION, "Sibster"
   (registered trademark) 062M, MFR: 20 g/10 min (measured at 230°C), G'(25): 0.6 MPa)

- TH130: Tackifier
   (Terpene phenol YS Polyster TF130 manufactured by YASUHARA CHEMICAL CO., LTD.)
- PX1150N: Tackifier
   (Terpene resin YS Resin PX1150N manufactured by YASUHARA CHEMICAL CO., LTD.)
- UH115: Tackifier
   (Terpene phenol YS Polyster U UH115 manufactured by YASUHARA CHEMICAL CO., LTD.)
- EP1001: Olefin-based resin containing 4-methyl-1-pentene unit
   ("ABSORTOMER" (registered trademark) EP-1001 manufactured by Mitsui Chemicals, Inc., MFR: 10 g/10 min (measured at 230°C))
- FTR6125: Aromatic hydrocarbon resin
   ("FTR" (registered trademark) 6125 manufactured by Mitsui Chemicals, Inc.)
- Propylene/ethylene copolymer: (Produced with a metallocene catalyst, MFR: 7 g/10 min (measured at 230°C), melting point = 115°C)
- LDPE-1: Commercially available low density polyethylene (MFR: 5.0 g/10 min (measured at 190°C), density: 931 kg/m$^3$)
- LDPE-2: Commercially available low density polyethylene (MFR: 2.0/10 min (measured at 190°C), density: 918 kg/m$^3$)
- A-4085S: Ethylene-butene copolymer
   ("Tufmer" (registered trademark) A-4085S manufactured by Mitsui Chemicals, Inc., MFR: 3.6 g/10 min (measured at 190°C))
- HomoPP: Commercially available homopolypropylene
   (MFR: 7 g/10 min (measured at 230°C))
- PE particles MB: PE particle masterbatch composed of 90 mass% of LDPE-1 and 10 mass% of polyethylene particles having an average particle diameter of 10 um ("MIPELON" (registered trademark) PM-200 manufactured by Mitsui Chemicals, Inc.)
- EMAA: Ethylene-methacrylic acid copolymer
   ("Nucrel" (registered trademark) N1525 manufactured by DOW-MITSUI POLYCHEMICALS CO., LTD. (acid content calculated by FT-IR method: 15 mass%, MFR: 25 g/10 min (measured at 190°C))
- LF300: Maleic anhydride-modified polyethylene
   ("ADMER" (registered trademark) LF300 manufactured by Mitsui Chemicals, Inc., MFR: 1.2 g/10 min (measured at 230°C))
- EP1013: Olefin-based resin containing 4-methyl-1-pentene unit
   ("ABSORTOMER" (registered trademark) EP-1013 manufactured by Mitsui Chemicals, Inc., MFR: 10 g/10 min (measured at 230°C))
- BPP: Commercially available block polypropylene
   (MFR: 8.5 g/10 min (measured at 230°C))
- H1601: Polyolefin-based resin containing metal carboxylate group
   ("Hymilane" (registered trademark) H1601 manufactured by DOW-MITSUBISHI POLYCHEMICALS CO., LTD., MFR: 1.3 g/10 min (measured at 190°C))
- LDPE-3: Commercially available high pressure low density polyethylene
   (MFR: 6 g/10 min (measured at 190°C), density: 920 kg/m$^3$).

(Example 1)

The constituent resin of each layer was prepared as follows.

Resin layer A: 80 mass% of G1645 and 20 mass% of UH115 were previously kneaded with a twin-screw extruder and formed into chips, and used.

Substrate: 90 mass% of LDPE-1 and 10 mass% of EP1001 were used.

Layer including the surface opposite to the surface on the resin layer A side: 75 mass% of EMAA, 15 mass% of PE particles MB, and 10 mass% of EP1013 were used.

Next, the constituent resin of each layer was charged into each extruder of a T-die composite film forming machine having three extruders, the discharge amount of each extruder was adjusted such that the resin layer A was 20 um, the substrate was 90 um, and the layer including the surface opposite to the surface on the resin layer A side was 10 um, and these layers were laminated in this order, extruded from the composite T-die at an extrusion temperature of 200°C, cast on a roll with the surface temperature controlled to 40°C, and molded into a film shape, and wound to provide a laminated film.

(Examples 2 to 8 and Comparative examples 1 to 5)

A laminated film was obtained in the same manner as in Example 1 except that each composition was as shown in tables. The evaluation results are shown in the tables.

(Example 9)

The composition constituting the resin layer A was 80 mass% of G1645 and 20 mass% of UH115, and the composition constituting the layer including the surface opposite to the surface on the resin layer A side was 75 mass% of EMAA, 15 mass% of PE particles MB, and 10 mass% of EP1013. The constituent composition of each layer was charged into each extruder of a T-die composite film forming machine having two extruders, the discharge amount of each extruder was adjusted such that the resin layer A was 20 um and the layer including the surface opposite to the surface on the resin layer A side was 100 um, and these layers were laminated in this order, extruded from the composite T-die at an extrusion temperature of 200°C, cast on a roll with the surface temperature controlled to 40°C, and molded into a film shape, and wound to provide a laminated film. The evaluation results are shown in the tables.

(Comparative example 6)

The composition constituting the resin layer A was the same as in Example 1, and the composition constituting the substrate layer was 100 mass% of LDPE -2. The constituent composition of each layer was charged into each extruder of a T-die composite film forming machine having two extruders, and the discharge amount of each extruder was adjusted such that the resin layer A was 20 um and the substrate was 100 um, and these layers were laminated in this order, extruded from the composite T-die at an extrusion temperature of 200°C, and the substrate layer side was cast on a fine uneven (embossed) roll with the surface temperature controlled to 40°C, and molded into a film shape, and wound to obtain a laminated film. The evaluation results are shown in the tables.

[Table 1-1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Resin layer A | G1645 | Mass% | 80 | 90 | | 80 | 60 | 80 | 80 | | 80 |
| | H1052 | Mass% | | | | | 20 | | | | |
| | G1657 | Mass% | | | | | | | | | |
| | 8903P | Mass% | | | | | | | | | |
| | 062H | Mass% | | | 60 | | | | | | |
| | S1613 | Mass% | | | | | | | | 80 | |
| | 062M | Mass% | | | | | | | | | |
| | TH130 | Mass% | | | | | 20 | | | | |
| | PX1150N | Mass% | | | 20 | | | | | 20 | |
| | UH115 | Mass% | 20 | 10 | | 20 | | 20 | 20 | | 20 |
| | EP1001 | Mass% | | | 20 | | | | | | |
| | FTR6125 | Mass% | | | | | | | | | |
| | Propylene/ethylene copolymer | Mass% | | | | | | | | | |
| Substrate | EP1001 | Mass% | 10 | 10 | 10 | | 30 | | | 10 | |
| | LDPE-1 | Mass% | 90 | 90 | 90 | 90 | | 90 | 100 | 90 | |
| | LDPE-2 | Mass% | | | | 10 | 70 | 10 | | | |
| | A-40855 | Mass% | | | | | | | | | |
| | HomoPP | Mass$ | | | | | | | | | |

|  |  |  | Example 1 | Example 2 | Example 3 | Example 4 | Example 5 | Example 6 | Example 7 | Example 8 | Example 9 |
|---|---|---|---|---|---|---|---|---|---|---|---|---|
| Layer including surface opposite to resin layer A surface | PE particles MB | Mass% | 15 | 20 | 15 | 10 | 15 | 20 | 10 | 15 | 15 |
|  | EMAA | Mass% | 75 |  | 75 | 80 | 75 | 50 | 90 | 75 | 75 |
|  | LF300 | Mass% |  | 70 |  |  |  |  |  |  |  |
|  | EP1013 | Mass% | 10 | 10 | 10 | 10 | 10 | 10 |  | 10 | 10 |
|  | BPP | Mass% |  |  |  |  |  | 20 |  |  |  |
|  | H1601 | Mass% |  |  |  |  |  |  |  |  |  |
|  | LDPE-3 | Mass% |  |  |  |  |  |  |  |  |  |
| Evaluation results | Ten-point average roughness Rz of surface opposite to surface on resin layer A side | $\mu$m | 7.8 | 8.5 | 7.7 | 5.5 | 7.2 | 7.9 | 5.7 | 7. 1 | 7.3 |
|  | Polycarbonate probe tack maximum value F at 23°C on surface on resin layer A side | N/mm$^2$ | 0.21 | 0.19 | 0. 13 | 0.24 | 0. 15 | 0.24 | 0.25 | 0. 14 | 0.23 |
|  | Tear strength at 23°C | N/mm | 2.80 | 2.40 | 2.50 | 2.40 | 0. 95 | 2.60 | 2.80 | 2.54 | 0.45 |
|  | Tensile elastic modulus at 300 mm/min | MPa | 150 | 135 | 133 | 150 | 98 | 168 | 180 | 146 | 79 |
|  | Arithmetic average waviness Wa | $\mu$m | 0.19 | 0.17 | 0.24 | 0.19 | 0. 19 | 0.17 | 0.18 | 0. 14 | 0.18 |
|  | Adhesion force to low-melting-point alloy | N/78.5 mm$^2$ | 48 | 46 | 45 | 53 | 44 | 37 | 62 | 42 | 46 |
|  | Peeling force after storage at 23°C | N/25 mm | 2.2 | 2.1 | 1.9 | 3.1 | 1.4 | 1. 9 | 4.5 | 2.5 | 2.5 |
|  | Curved surface followability |  | 4 | 4 | 3 | 4 | 4 | 4 | 4 | 3 | 5 |
|  | Contamination state |  | A | A | B- | A | A | A | A | A | A |

EP 4 306 317 A1

[Table 1-2]

| | | | Comparative Example 1 | Comparative Example 2 | Comparative Example 3 | Comparative Example 4 | Comparative Example 5 | Comparative Example 6 |
|---|---|---|---|---|---|---|---|---|
| Resin layer A | G1645 | Mass% | 80 | | | | | 80 |
| | H1052 | Mass% | | | | 80 | | |
| | G1657 | Mass% | | 80 | | | | |
| | 8903P | Mass% | | | | | 70 | |
| | 062H | Mass% | | | | | | |
| | S1613 | Mass% | | | | | | |
| | 062M | Mass% | | | 80 | | | |
| | TH130 | Mass% | | 20 | | 20 | 10 | |
| | PX1150N | Mass% | | | | | | |
| | UH115 | Mass% | 20 | | | | | 20 |
| | EP1001 | Mass% | | | | | 20 | |
| | FTR6125 | Mass% | | | 10 | | | |
| | Propylene/ethylene copolymer | Mass% | | | 10 | | | |
| Substrate | EP1001 | Mass% | 10 | 10 | | 10 | 10 | |
| | LDPE-1 | Mass% | 90 | 90 | | 90 | 90 | |
| | LDPE-2 | Mass% | | | | | | 100 |
| | A-4085S | Mass% | | | 10 | | | |
| | HomoPP | Mass% | | | 90 | | | |
| Layer including surface opposite to resin layer A surface | PE particles MB | Mass% | | 15 | | 15 | 15 | |
| | EMAA | Mass% | | 75 | | 75 | 75 | |
| | LF300 | Mass% | | | | | | |
| | EP1013 | Mass% | | 10 | | 10 | 10 | |
| | BPP | Mass% | | | | | | |
| | H1601 | Mass% | 100 | | | | | |
| | LDPE-3 | Mass% | | | 100 | | | |

| Evaluation results | | | Comparative Example 1 | Comparative Example 2 | Comparative Example 3 | Comparative Example 4 | Comparative Example 5 | Comparative Example 6 |
|---|---|---|---|---|---|---|---|---|
| | Ten-point average roughness Rz of surface opposite to surface on resin layer A side | μm | 0.3 | 7.6 | 0.2 | 7.8 | 7.7 | 5.0 |
| | Polycarbonate probe tack maximum value F at 23°C on surface on resin layer A side | N/mm$^2$ | 0.21 | 0.09 | 0.08 | 0.06 | 0.08 | 0.22 |
| | Tear strength at 23°C | N/mm | 2.60 | 2.52 | 3.80 | 2.40 | 2.50 | 2.45 |
| | Tensile elastic modulus at 300 mm/min | MPa | 153 | 151 | 900 | 150 | 151 | 165 |
| | Arithmetic average waviness Wa | μm | 0.17 | 0.09 | 0.10 | 0.10 | 0.13 | 0.19 |
| | Adhesion force to low-melting-point alloy | N/78.5 mm$^2$ | 45 | 44 | 15 | 42 | 42 | 19 |
| | Peeling force after storage at 23°C | N/25 mm | 62 | 1.7 | 1.5 | 2.5 | 1.9 | 1.1 |
| | Curved surface followability | | 4 | 2 | 1 | 2 | 2 | 4 |
| | Contamination state | | A | A | C | A | A | A |

INDUSTRIAL APPLICABILITY

Since the laminated film and the film roll of the present invention have sufficient adhesiveness and followability to an adherend, the laminated film and the film roll can be preferably used as surface protective films for products made of various materials such as synthetic resins, metals, and glasses.

DESCRIPTION OF REFERENCE SIGNS

1: Metal wire having loop portion
2: Low-melting-point alloy
3: Laminated film
4: Lower chuck
5: Polycarbonate plate

**Claims**

1.  A laminated film comprising a resin layer A and a substrate,
    wherein the laminated film satisfies the following (a), (b), and (c):

    (a) a polycarbonate probe tack maximum value F at 23°C on a surface on a resin layer A side is 0.098 N/mm$^2$ to 0.294 N/mm$^2$;
    (b) a ten-point average roughness Rz of a surface which is opposite to the surface on the resin layer A side is 5 um or more; and
    (c) a layer including the surface which is opposite to the surface on the resin layer A side contains a polyolefin-based resin containing a carboxylic acid group and/or a polyolefin-based resin containing a metal carboxylate group.

2.  The laminated film according to claim 1, wherein a tear strength at 23°C is 0.490 N/mm to 9.80 N/mm.

3.  The laminated film according to claim 1 or 2, wherein a tensile elastic modulus at an atmospheric temperature of 23°C and a tensile speed of 300 mm/min is 80 MPa to 300 MPa.

4.  The laminated film according to any one of claims 1 to 3, wherein an arithmetic average waviness Wa of the surface on the resin layer A side is less than 0.20 um.

5.  The laminated film according to any one of claims 1 to 4, wherein the laminated film is for surface protection of glasses lenses.

6.  The laminated film according to any one of claims 1 to 5, wherein the resin layer A contains a styrene-based elastomer as a main component.

7.  The laminated film according to claim 6, wherein 100 mass% of the resin layer A contains 50 mass% to 90 mass% of the styrene-based elastomer and 10 mass% to 50 mass% of a terpene-based resin.

8.  The laminated film according to claim 6 or 7, wherein the resin layer A contains the styrene-based elastomer as the main component, and a storage elastic modulus of the styrene-based elastomer at 25°C and 1 Hz is 0.05 MPa to 0.9 MPa.

9.  The laminated film according to any one of claims 1 to 8, wherein the layer including the surface opposite to the surface on the resin layer A side contains an olefin-based resin containing a 4-methyl-1-pentene unit.

10. The laminated film according to any one of claims 1 to 9, wherein an adhesion force between the layer including the surface opposite to the surface on the resin layer A side and a low-melting-point alloy having a melting point of 47°C is 30 N/78.5 mm$^2$ to 90 N/78.5 mm$^2$.

11. The laminated film according to any one of claims 1 to 10, wherein the laminated film has a 180° peeling force of 5.0 N/25 mm or less after the surface on the resin layer A side and the surface opposite to the surface on the resin layer A side of the laminated film are bonded at 23°C and 0.1 MPa and then stored at 23°C for 24 hours.

12. A film roll obtained by winding the laminated film according to any one of claims 1 to 11 into a roll shape in a state where the surface on the resin layer A side and the surface opposite to the surface on the resin layer A side are in contact with each other.

Figure 1

peeling off direction

Figure 2

<u>1</u>

## INTERNATIONAL SEARCH REPORT

| International application No. |
| --- |
| **PCT/JP2022/008218** |

| A. | CLASSIFICATION OF SUBJECT MATTER |
| --- | --- |

*B32B 27/32*(2006.01)i; *C09J 7/38*(2018.01)i; *C09J 11/08*(2006.01)i; *C09J 109/06*(2006.01)i
FI:    B32B27/32 101; C09J7/38; C09J11/08; C09J109/06

According to International Patent Classification (IPC) or to both national classification and IPC

| B. | FIELDS SEARCHED |
| --- | --- |

Minimum documentation searched (classification system followed by classification symbols)

B32B1/00-43/00; C09J1/00-5/10; C09J7/00-7/50; C09J9/00-201/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2011/122287 A1 (TORAY ADVANCED FILM CO., LTD.) 06 October 2011 (2011-10-06)<br>    claims, table 1, examples 5, 6 | 1-12 |
| A | WO 2011/122288 A1 (TORAY ADVANCED FILM CO., LTD.) 06 October 2011 (2011-10-06)<br>    claims, tables 1, 2, examples | 1-12 |
| A | JP 2018-1620 A (TORAY IND., INC.) 11 January 2018 (2018-01-11)<br>    claims, examples | 1-12 |
| A | WO 2019/087992 A1 (TORAY ADVANCED FILM CO., LTD.) 09 May 2019 (2019-05-09)<br>    claims, table 1, examples | 1-12 |
| A | JP 2018-119138 A (TORAY IND., INC.) 02 August 2018 (2018-08-02)<br>    claims, tables 1, 2, examples | 1-12 |
| A | WO 2017/169451 A1 (TORAY ADVANCED FILM CO., LTD.) 05 October 2017 (2017-10-05)<br>    claims, tables 1, 2, examples | 1-12 |

| ☑ Further documents are listed in the continuation of Box C. | ☑ See patent family annex. |
| --- | --- |

\*    Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
| **31 March 2022** | **12 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/008218** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2018-145365 A (TORAY ADVANCED FILM CO., LTD.) 20 September 2018 (2018-09-20)<br>     claims, tables 1-1, 1-2, examples | 1-12 |
| A | JP 2020-26531 A (TORAY IND., INC.) 20 February 2020 (2020-02-20)<br>     claims, tables 1-1, 1-2, examples | 1-12 |
| A | WO 2020/203214 A1 (TORAY ADVANCED FILM CO., LTD.) 08 October 2020 (2020-10-08)<br>     claims, tables 1, 2, examples | 1-12 |

Form PCT/ISA/210 (second sheet) (January 2015)

INTERNATIONAL SEARCH REPORT
Information on patent family members

International application No.

**PCT/JP2022/008218**

| Patent document cited in search report | | | Publication date (day/month/year) | Patent family member(s) | | | Publication date (day/month/year) |
|---|---|---|---|---|---|---|---|
| WO | 2011/122287 | A1 | 06 October 2011 | US | 2013/0149525 | A1 | |
| | | | | claims, examples 5, 6, table 1 | | | |
| | | | | EP | 2554614 | A1 | |
| | | | | CN | 102844392 | A | |
| | | | | TW | 201141979 | A | |
| WO | 2011/122288 | A1 | 06 October 2011 | US | 2013/0011614 | A1 | |
| | | | | claims, examples, tables 1, 2 | | | |
| | | | | EP | 2554376 | A1 | |
| | | | | CN | 102834263 | A | |
| | | | | TW | 201202037 | A | |
| JP | 2018-1620 | A | 11 January 2018 | (Family: none) | | | |
| WO | 2019/087992 | A1 | 09 May 2019 | CN | 111246996 | A | |
| | | | | TW | 201922991 | A | |
| JP | 2018-119138 | A | 02 August 2018 | (Family: none) | | | |
| WO | 2017/169451 | A1 | 05 October 2017 | CN | 108699404 | A | |
| | | | | TW | 201806763 | A | |
| JP | 2018-145365 | A | 20 September 2018 | (Family: none) | | | |
| JP | 2020-26531 | A | 20 February 2020 | (Family: none) | | | |
| WO | 2020/203214 | A1 | 08 October 2020 | TW | 202102359 | A | |

Form PCT/ISA/210 (patent family annex) (January 2015)

**REFERENCES CITED IN THE DESCRIPTION**

**Patent documents cited in the description**

- JP 4146983 A
- JP 11512478 W
- JP 2011037243 A
- JP 6270358 A
- JP 2013194132 A